# EUROPEAN PATENT APPLICATION

(11) **EP 1 134 117 A1**
(43) Date of publication of application: **19.09.2001**
(21) Application number: 00201379.5
(22) Date of filing: 18.04.2000
(51) Int. Cl.: B60P 3/04, B60S 1/64, A01K 1/02

(54) **Arrangement for cleaning and sanitizing boxes of hauling vehicles, particularly for livestock**

(30) Priority: 16.03.2000 ES 200000703
(71) Applicant: Castané Basagana, Sebastián, 08500 - Vic (ES); Castane Homs, Roberto, 08500 - Vic (ES); Molas Puigferrat, Alberto, 08500 - Vic (ES)
(72) Inventor: Castané Basagana, Sebastián, 08500 - Vic (ES); Castane Homs, Roberto, 08500 - Vic (ES); Molas Puigferrat, Alberto, 08500 - Vic (ES)
(74) Representative: Aguilar Forment, Domènec

(57) **Abstract**

The arrangement includes, in the ceiling of each one of the box floors, at least one branch (1a, 1b, 1c) for the conduct of liquids, equipped with ejectors (20-32) and connected to a circuit that is able to feed the branch and the ejectors either with water or with a sanitizing solution, so that the ejectors spray jets of such liquids alternately for the cleaning and sanitizing of the floors. Applicable for automating such cleaning and sanitizing operations.

## Description

The invention refers to an arrangement for cleaning and sanitizing boxes of haulage vehicles, particularly for livestock.

In lorry or trailer boxes, the need to clean the insides often arises, such as between two successive trips.

Of these types of boxes, the ones that make it possible to understand the invention best are those used for the haulage of livestock, whereby the description which follows is particularly oriented towards this specific type of boxes, although this should not be interpreted as its being limited in terms of the field and the possibilities of application of the invention.

Livestock haulage boxes are heavily contaminated by parasites, excrements and other animal residue. This dirt not only generates evident discomfort and hazards to the people in the proximity of the vehicle, but also increases the stress on the animals being transported, and represents a potent disease and plague transmission vector, particularly from animals transported in one trip and towards those on the next one. This dirt has specific physicochemical features which in many cases lead it to be able to stick to any substrate (floor, box walls) that it is deposited on.

Health standards are becoming increasingly more stringent as far as the hygiene of these boxes is concerned, in order to assure that such dirt remains as little time as possible in the boxes, and to avoid its perpetuation in specific points which are difficult to reach.

Taking into account the considerable size of the lorry or trailer boxes in question, and that such boxes may be divided into different floors and compartments, then it is easy to understand that the cleaning and sanitization thereof, carried out with conventional means (cleaning with pressure hoses, sweeping, the more or less manual application of sanitizing solution) are long, unpleasant operations with by no means reliable results.

This invention aims to solve the problems posed by the cleaning and sanitization of haulage vehicle boxes, particularly those used for livestock.

To this end the invention proposes an arrangement for cleaning and sanitizing boxes of haulage vehicles, particularly for livestock, of the type of box which has one or more floors, each one with its own ceiling, the arrangement being characterised in that it includes, in the ceiling of each one of said floors, at least one branch for the conduct of liquids, equipped with ejectors and connected to a circuit that is able to feed the branch and the ejectors either with water or with a sanitizing solution, so that the ejectors spray jets of such liquids alternately for the cleaning and sanitizing of the floors.

According to an optional feature, when the box also has a rear gate, at least one of the ejectors is able to spray jets against the surface of the gate which, when closed, faces into the box.

According to another optional feature, when the box has two or more floors, the branches of all of them are fed by the same water source and by the same source of sanitizing solution.

According to another optional feature, the sources of water and/or sanitizing solution are sources external to the vehicle.

According to another optional feature, the source of sanitizing solution is a tank carried by the vehicle and pressurised by the pneumatic equipment of this vehicle.

According to another optional feature, the arrangement includes a control unit with means for programming the cleaning and sanitizing cycles of each floor, so that cleaning always begins on the top floor, and once completed is followed by the cleaning of the remaining floors until the bottom floor has been cleaned, and so that sanitizing (if carried out) is performed in the same downward sequence, and always once all the floors have been cleaned first.

According to another optional feature, said means for programming are able to impose pauses in the liquid flow so that the dirt can be soaked or the action of the sanitizing solution can be prolonged.

According to another optional feature, the control unit is programmed on the basis of elapsed time.

According to another optional feature, the control unit is programmed on the basis of the volume of each liquid fed, measured by a flowmeter inserted between the corresponding source and the branches.

According to another optional feature, the water source feeds a main line fitted with an inlet solenoid valve and with said flowmeter, with the main line branching out downstream of the flowmeter to give rise to the branches, each one of the aforementioned branches being fitted with a solenoid valve located near the flowmeter.

According to another optional feature, the arrangement includes secondary circuit parts to allow cleaning or sanitizing without the intervention of the control unit or without the pressure of the pneumatic equipment of the vehicle.

Other features, objectives and advantages will become evident following the descriptive complement which follows, and when it is read jointly with the attached drawings, in which:
Fig. 1 is a circuit diagram of an arrangement according to the invention;
Fig. 2 is a longitudinal section of the assembly of a lorry or trailer box fitted with the arrangement;
Fig. 3 is an rear side view, of the box of Fig. 2;
Fig. 4 is a diagram of a possible operating mode for the arrangement.

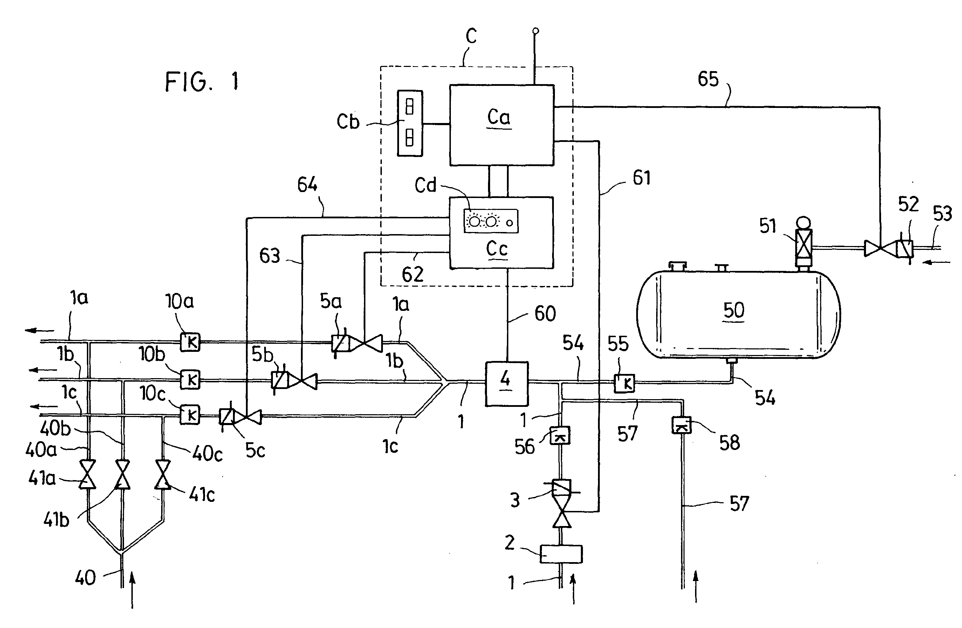

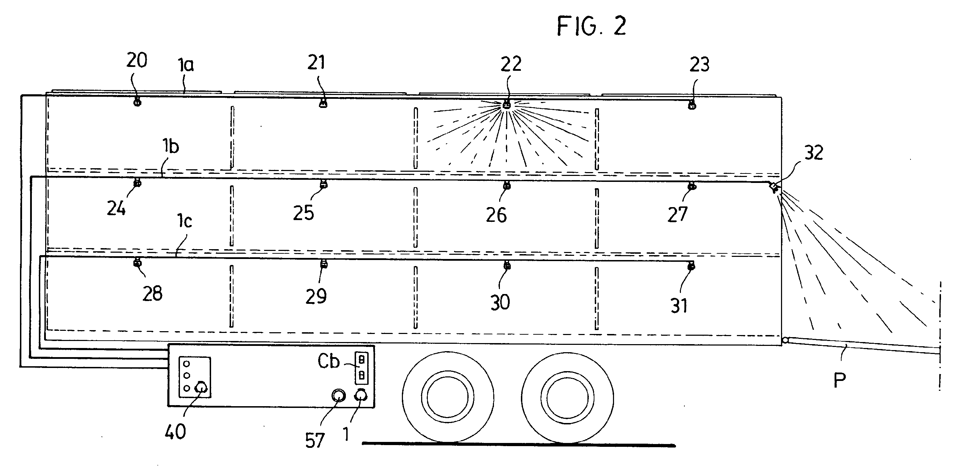

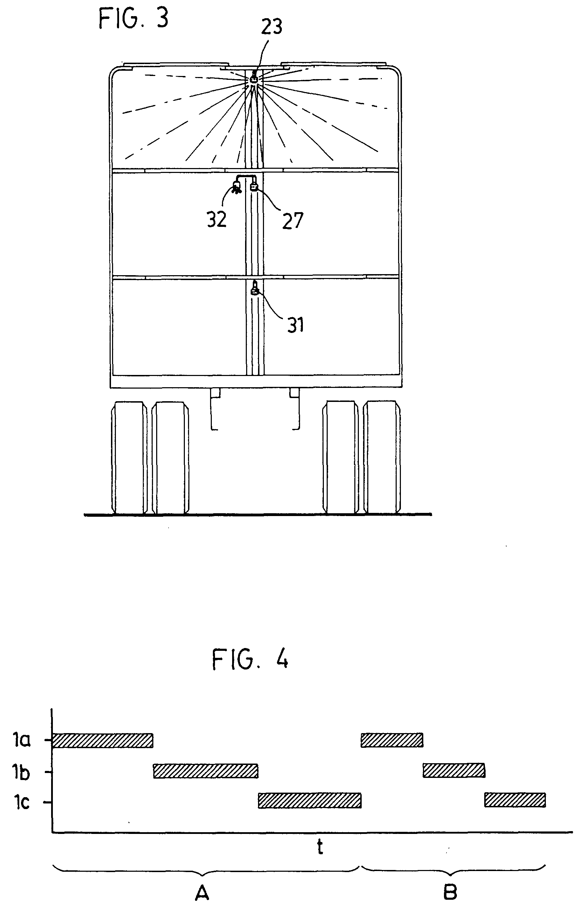

Referring first to Fig. 1, the arrangement includes a main line 1, with an inlet coming from an external source, not shown. The main line 1 is fitted with a filter 2, and downstream of the latter with a solenoid valve 3, downstream of which a flowmeter 4 is inserted. Downstream from flowmeter 4, the main line 1 is divided into three main branches 1a, 1b and 1c, fitted with respective solenoid valves 5a, 5b and 5c. Each one of the main branches 1a, 1b and 1c corresponds to one of the floors of the haulage box. As may be seen from Figs. 2 and 3, the main branch 1a extends along the central portion of the ceiling of the highest floor of the box, where it is equipped with diffusers or ejectors 20 to 23, which are chosen in such a way that they distribute pressurised water over the area they can cover. Each one of the main branches 1b and 1c extends along each one of the remaining floors and is correspondingly equipped with dynamic ejectors 24 to 27 and 28 to 31, respectively. Ejectors 20 to 31 are preferably of the centrifuge type, and impel the water jets substantially in all directions so that they reach the largest possible part of the corresponding inside surfaces of the box. As can be seen in Fig. 2, the box is of the type which is equipped with a rear tiltable gate P, whose top surface (in the position of the drawing) must also be cleaned and sanitized. To this end, one of the main branches (1b in the embodiment shown) includes a static end ejector 32, arranged in such as way as to pressure-spray said surface of gate P.

Thus, it is understood that if the water-flow solenoid valve 3 is open, the valve 58 (one-way or manually-operated valve, to which reference is made below) is closed, and the air-flow solenoid valve 52 (to which reference is made below) is closed, the pressure from the external water source will impel it through flowmeter 4 to the main branches 1a, 1b and 1c and ejectors 20 to 32. The relevant operation of the corresponding solenoid valves 5a, 5b and 5c will enable the water flow to be directed alternately towards each one of the main branches 1a, 1b and 1c and thereby proceed to clean the different floors of the box in succession.

Fig. 1 also shows that downstream from the solenoid valves 5a, 5b and 5c, each main branch 1a, 1b and 1c is fitted with its respective one-way valve 10a, 10b and 10c. Downstream from the one-way valves 10a, 10b and 10c a respective secondary branch 40a, 40b and 40c is connected to each main branch 1a, 1b and 1c, with these secondary branches coming from a secondary water line 40, to which they are connected by corresponding manually-operated valves 41a, 41b and 41c. The secondary line 40 has a water inlet coming from an external source, not shown. The secondary line 40, the manually-operated valves 41a, 41b and 41c, the secondary branches 40a, 40b and 40c, and the one-way valves 10a, 10b and 10c make it possible, if necessary, for the arrangement to be used to clean the box without the automatic control unit C, which shall be referred to below, should there be a fault in the electrical equipment or other such eventualities. To do so, it will suffice to connect the secondary line 40 to its external source and open valves 41a, 41b and 41c.

On the right of Fig. 1 a tank 50 is shown, for containing a sanitizing solution, of the type normally available on the market. Tank 50, by means of a pressure-adjusting device 51 and a solenoid valve 52, is fed with pressurised air which reaches it through a line 53 of the pneumatic equipment of the vehicle or else from an external source (not shown). Tank 50 is connected to the main line 1, upstream from the flowmeter 4 by means of a line 54, and through a one-way valve 55. Another one-way valve 56 is arranged on the main line 1 between solenoid valve 3 and the connection point of lines 1 and 54.

Another line 57 is also connected to the main line 1, the former being fitted with a manually-operated or one-way valve 58 and connected to an external source (not shown) of sanitizing solution.

Thus, it is understood that if the water-flow solenoid valve 3 is closed, the valve 58 (one-way or manually-operated valve) is closed, and the air-flow solenoid valve 52 is open, the pressurized air will pressurise the sanitizing solution in tank 50 to impel it through the flowmeter 4 to the main branches 1a, 1b and 1c and ejectors 20 to 32. The relevant operation of the corresponding solenoid valves 5a, 5b and 5c will enable the flow of sanitizing solution to be directed alternatively towards each one of the main branches 1a, 1b and 1c and thereby proceed to sanitize the several floors of the box in succession.

Alternatively, for example, if use of the tank 50 and its associated parts (pressure-adjusting device 51, solenoid valve 52, line 53, line 54 and one-way valve 55) were omitted or if there were a fault in the lorry's electrical or pneumatic equipment, the sanitizing solution may be injected, for example, by means of an external pump (not shown) through line 57.

The operation of the arrangement is governed by a control unit C, which is electronic and programmable. Unit C includes, firstly, a connection line 60, with the flowmeter 4 to receive information constantly from the flow of liquid that has gone through it in a predetermined time; it also comprises the respective connection lines 61, 62, 63, 64 and 65 with the several solenoid valves 3, 5a, 5b, 5c and 52 to transmit the corresponding opening/closing signals to them.

The control unit C comprises a main control module Ca for controlling the operation of solenoid valves 3 and 52, with a device Cb for the general start/stop and the start/stop for the sanitizing stage. Unit C also comprises a secondary module Cc for running the resident cleaning and sanitizing program by the operation of the solenoid valves 5a, 5b and 5c, which program can be adapted to specific needs via external controls Cd. The signal coming from the flowmeter 4, monitored by unit C is the one used in this embodiment to trigger the corresponding operating steps. However, those conversant with the matter will understand that instead of relying on a flowmeter signal, unit C could be based on the measurement of other parameters, such as the time elapsed.

The arrangement is based on the principle whereby cleaning with pressurised water is carried out on a by-floor basis, starting at the top; once the top floor has been cleaned, the following ones are then cleaned in succession until the lowest floor has been cleaned. Sanitizing (if carried out) is performed in the same downward sequence, and always after cleaning. This is shown in diagram form in Fig. 4, where 1a, 1b and 1c represent the actions through the branches 1a, 1b and 1c. The total washing cycle takes place in total time A (sum of the washing action time of the three branches), followed by the total sanitizing cycle over total time B (sum of the sanitizing action time of the three branches).

While not shown in Fig. 4, one or more soaking pauses may be provided for, for example before or after a first cleaning and before or after a second cleaning. Furthermore, if very aggressive sanitizing solutions are used, it would be possible to programme, for example, a pause of varying length following spraying with the solution, after which rinsing with pressurised water would be carried out.

The foregoing has assumed that cleaning takes place solely with pressurised water spraying. Naturally, this water could contain detergents or other cleaning additives, either from the external source or injected into the actual arrangement by means of well-known devices in this field.

Although the invention is particularly interesting for livestock haulage vehicle boxes, it is perfectly applicable to other boxes of vehicles that require frequent cleaning and/or sanitizing (e.g. boxes of hospital refuse haulage vehicles, and so).

Those conversant with the matter will understand that there are many possible modifications and variants in the execution of the invention described, all of which fall within the scope of protection defined by the following claims.

## Claims

1. Arrangement for cleaning and sanitizing boxes of haulage vehicles, particularly for livestock, of the type of box which has one or more floors, each one with its own ceiling, **characterised in that** the arrangement includes, in the ceiling of each one of said floors, at least one branch (1a, 1b, 1c) for the conduct of liquids, equipped with ejectors (20-32) and connected to a circuit that is able to feed the branch and the ejectors either with water or with a sanitizing solution, so that the ejectors spray jets of such liquids alternately for the cleaning and sanitizing of the floors.

2. Arrangement according to claim 1, **characterised in that**, when the box also has a rear gate, at least one of the ejectors (32) is able to spray jets against the surface of the gate which, when closed, faces into the box.

3. Arrangement according to claim 1 or 2, **characterised in that**, when the box has two or more floors, the branches (1a, 1b, 1c) of all of them are fed by the same water source and by the same source of sanitizing solution.

4. Arrangement according to one of the claims 1 to 3, **characterised in that** the sources of water and/or sanitizing solution are sources external to the vehicle.

5. Arrangement according to one of the claims 1 to 3, **characterised in that** the source of sanitizing solution is a tank (50) carried by the vehicle and pressurised by the pneumatic equipment (53) of this vehicle.

6. Arrangement according to one of the previous claims, **characterised in that** it includes a control unit (C) with means for programming the cleaning and sanitizing cycles of each floor, so that cleaning always begins on the top floor, and once completed is followed by the cleaning of the remaining floors until the bottom floor has been cleaned, and so that sanitizing (if carried out) is performed in the same downward sequence, and always once all the floors have been cleaned first.

7. Arrangement according to claim 6, **characterised in that** said means for programming are able to impose pauses in the liquid flow so that the dirt can be soaked or the action of the sanitizing solution can be prolonged.

8. Arrangement according to one of the claims 6 and 7, **characterised in that** the control unit (C) is programmed on the basis of elapsed time.

9. Arrangement according to one of the claims 6 and 7, **characterised in that** the control unit (C) is programmed on the basis of the volume of each liquid fed, measured by a flowmeter (4) inserted between the corresponding source and the branches (1a, 1b, 1c).

10. Arrangement according to one of the previous claims, **characterised in that** the water source feeds a main line (1) fitted with an inlet solenoid valve (3) and with said flowmeter (4), with the main line branching out downstream of the flowmeter (4) to give rise to the branches (1a, 1b 1c), each one of the aforementioned branches being fitted with a solenoid valve (5a, 5b, 5c) located near the flowmeter (4).

11. Arrangement according to one of the previous claims, **characterised in that** it includes secondary circuit parts (10a, ..., 40, 40a, ..., 41a, ..., 55, 56, 57, 58) to allow cleaning or sanitizing without the intervention of the control unit (C) or without the pressure of the pneumatic equipment (53) of the vehicle.
